# EUROPÄISCHE PATENTSCHRIFT

(11) **EP 0 564 542 B1**
(45) Veröffentlichungstag und Bekanntmachung des Hinweises auf die Patenterteilung: **07.09.1994**
(21) Anmeldenummer: 92902387.7
(22) Anmeldetag: 27.12.1991
(51) Int. Cl.: F02B 37/04, F02B 37/00

(54) **AUFLADUNGSEINRICHTUNG EINER VERBRENNUNGSMASCHINE**
SUPERCHARGING DEVICE FOR AN INTERNAL COMBUSTION ENGINE
DISPOSITIF DE SURALIMENTATION D'UN MOTEUR A COMBUSTION INTERNE

(30) Priorität: 29.12.1990 CS 6963/90
(43) Veröffentlichungstag der Anmeldung: 13.10.1993
(73) Patentinhaber: CZ STRAKONICE A.S., 386 15 Strakonice (CS)
(72) Erfinder: LECNAR, Josef, 140 00 Praha 4 (CS)
(74) Vertreter: Glawe, Delfs, Moll & Partner
(86) Internationale Anmeldenummer: CS9100004
(87) Internationale Veröffentlichungsnummer: WO9212335

(56) Entgegenhaltungen:
- DE-B- 1 231 951
- DE-C- 701 457
- FR-A- 1 406 599
- FR-A- 2 226 559
- US-A- 2 306 277
- US-A- 2 620 621
- Patent Abstracts of Japan, vol. 10, no. 66 (M-461) (2123) 15 March 1986 & JP-A-60 212 621 (ISHIKAWAJIMA HARIMA JUKOGYO K.K.) 24 October 1985

## Beschreibung

### Gebiet der Technik

Die Erfindung betrifft eine Aufladungseinrichtung einer Verbrennungsmaschine, insbesondere einer Diesel-Verbrennungsmaschine.

### Stand der Technik

Die Aufladungseinrichtungen der Verbrennungsmaschinen sind durch einen Kompressor für Verdichtung der Verbrennungsluft gebildet, der mit einer abgasgetriebenen Turbine mechanisch verbunden ist. Die Möglichkeiten dieser Aufladungseinrichtungen sind jedoch begrentzt. Die in einer Stufe des Umlaufrades des Füllkompressors erreichte Verdichtung der Verbrennungsluft kann nicht wesentlich erhöht werden, die natürlichen Regelfähigkeiten der Aufladungseinrichtung sind nicht ausreichend und der Bereich des optimalen Wirkungsgrades in Arbeits-Zyklen kann nicht mehr wesentlich erweitert werden. Die einstufigen Aufladungseinrichtungen reichen bei Benützung in den Fahrzeugen nicht aus, da sie nichtfähig sind, der Forderung an einen grossen Mengen-Unterschied der zu liefernden Verbrennungsluft bei minimalen und bei maximalen Drehzahlen der aufgeladenen Maschine entgegenzukommen. Bei den zwei- und mehrstufigen Aufladungseinrichtungen mit nacheinander angeordneten einander abhängigen Abgasturbinen und Kompressoren für Verdichtung der Verbrennungsluft ist jedoch schwierig den Bereich des optimalen Wirkungsgrades einzelner Glieder zu erweitern und gleichzeitig eine wirkungsvolle Aufladung im ganzen Umfang des breiten Drehzahl- und Belastungs-Bereiches der Fahrzeug-Verbrennungsmaschine einzuhalten. Zum Zweck der Beseitigung der oben angeführten Nachteine werden komplizierte Regeleinrichtungen für Verdichtung der Verbrennungsluft bei Kompressoren und bei Abgasturbinen benützt. Diese Regeleinrichtungen sind jedoch sehr kompliziert und kostspielig und andere Regelverfahren wie z.B. die Ablassung der Abgasen, sind energetisch verlustig. Es ist eine Aufladungseinrichtung der Verbrennungsmotoren bekannt (FR 2.226.559), die eine mit einem Kompressor für Verdichtung der Verbrennungsluft mechanisch verbundene Abgasturbine beinhaltet, wobei die Leitung der verdichteten Verbrennungsluft aus dem Kompressor mit einer Abweigung für Abführung eines Teiles der verdichteten Verbrennungsluft in einen Wärmeaustauscher für den Wärmeaustausch mit den aus der Abgasturbine austretenden Abgasen vorsehen ist. Der Austritt der verdichteten und erwärmten Luft aus dem Wärmeaustauscher ist mit einem zweiten Eintritt der genannten Abgasturbine verbunden. In der beschriebenen Einrichtung treten zwei Medien in die Abgasturbine ein - die Abgasen mit hoher Temperatur und die in dem Wärmeaustauscher erwärmte Luft. Diese Medien mischen sich einander, womit ihre für die Arbeit in der Abgasturbine ausnützbare Gesamt-Wärmeenergie verniedrigt wird. Die Verniedrigung der gesamten ausnützbaren Energie ist nachteilig. Es ist auch eine Aufladungseinrichtung der Verbrennungsmotoren bekannt (US-PS 2.620.621) die eine mit einem Kompressor für Verdichtung der Verbrennungsluft mechanisch verbundene ABgasturbine sowie eine mit einem Zusatzkompressor mechanisch verbundene Zusatzturbine beinhaltet, wobei die Leitung der verdichteten Verbrennungsluft aus dem Kompressor mit einer Abzweigung für Ableitung eines Teils der verdichteten Verbrennungsluft in den Eintritt der Zusatzturbine versehen ist. In der genannten Ableitung ist eine Verbrennungskammer für Erwärmung des abgeleiteten TEils der verdichteten Verbrennungsluft gestaltet. Da eine beträchtliche Menge der Luft durch den Kompressor und Zusatzkompressor durchfliesst, muss auch eine viel grössere Menge der Luft verdichtet werden, als es für den Verbrennungsmotor nötig ist, wesentlich grösser, als die in der Abgasturbine und Zusatzturbine ausnützbare Menge der Abgasen. Die Wärmeenergie der Medien, die aus beiden Turbinen strömen, wird nicht ausgenützt.

### Das Wesen der Erfindung

Die oben angeführten Nachteile werden durch die erfindungsgemässe Aufladungseinrichtung der Verbrennungsmaschine beseitigt, die einen mit einer Abgasturbine mechanisch verbundenen Kompressor für Verdichtung der Verbrennungsluft und mindestens einen mit dem Kompressor für Verdichtung der Verbrennungsluft serienmässig angeordneten und mechanisch mit einer Zusatzturbine verbundenen Zusatzkompressor beinhaltet, wobei der Eintritt der Zusatzturbine mit dem Austritt der verdichteten Verbrennungsluft aus dem Kompressor verbunden ist, und der Austritt der verdichteten Verbrennungsluft aus dem Kompressor mit dem Eintritt des Zusatzkompressors und über einen Wärmeaustauscher für Wärmeaustausch zwischen den in der Abgasturbine expandierten Abgasen und der verdichteten Luft mit dem Eintritt der Zusatzturbine verbunden ist. Die erfindungsgemässe Aufladungseinrichtung der Verbrennungsmaschine kann mit einem regenerativen Wärmeaustauscher mit einer Wärmeübertragungstrennwand für Abtrennung der Abgasen und verdichteten Luft versehen werden oder mit einem rekuperativen Wärmeaustauscher für direktes Mischen der Abgasen und der verdichteten Luft versehen werden. Die erfindungsgemässe Aufladungseinrichtung der Verbrennungsmaschine kann vorteilhaft zwischen dem regenerativen Wärmeaustauscher und dem Eintritt der Zusatzturbine mit einer durch eine Verbrennungskammer mit einer unabhängigen Zufuhr des gasförmigen oder flussförmigen Brennstoffes gebildeten Erwärmungseinrichtung der verdichteten Luft versehen werden. Die erfindungsgemässe Aufladungseinrichtung der Verbrennungsmaschine kann vorteilhaft mit einem in der Verbindungsleitung der verdichteten Luft zum Wärmeaustäuscher vor dem Wärmeaustäuscher angeordneten Regelventil versehen werden.

Die Vorteile der erfindungsgemässen Aufladungseinrichtung der Verbrennungsmaschine bestehen in einer wirkungsvolleren Ausnützung der Abgas-Wärmeenergie, die eine Verbesserung des Gesamtwirkungsgrades des Arbeitszyklus der Verbrennungsmaschine zur Folge hat. Die Mengenregelung der verdichteten,in die Verbrennungsmaschine gelieferten Verbrennungsluft ist einfach und die abgelassene Menge der verdichteten Luft wird dabei für eine zusätzliche Verdichtung der Verbrennungsluft ausgenützt. Dies ist vorteilhaft besonders bei niedrigen Drehzahlen der Verbrennungsmaschine, wenn die durch die Verbrennungsmaschine abgenommene Menge der Verbrennungsluft senkt. Ein bedeutender Vorteil der erfindungsgemässen Aufladungseinrichtung besteht darin, dass die Aufladungseinrichtung eine genügende Verdichtung der Verbrennungsluft in einem breiten Feld der Betriebsdrehzahlen der aufgeladenen Maschine erreicht, i.e. bei kleinen sowohl bei grossen Mengen der in die Verbrennungsmaschine gelieferten Verbrennungsluft. Die Verdichtung der Verbrennungsluft in mehreren Stufen ermöglicht dabei eine grössere Verdichtung der Verbrennungsluft. Bei Erniedrigung der Drehzahlen der Verbrennungsmaschine und bei Abnahme des Verbrauches der Verbrennungsluft erhöht die erfindungsgemässe Aufladungseinrichtung mittels ihrer Selbstregelung die Menge der verdichteten und über den Wärmeaustauscher in die Zusatzturbine abgeführten Luft. Dadurch wird die Leistung der Zusatzturbine erhöht, die eine grössere Verdichtung der Verbrennungsluft im Zusatzkompressor besonders im erwunschten Bereich der niedrigen Drehzahlen der Verbrennungsmaschine bewirkt. Der Vorteil eines regenerativen Wärmeaustauschers mit einer Wärmeübertragungstrennwand für die Abtrennung der Abgasen und der verdichteten Luft besteht darin, dass der Druck hinter der Abgasturbine durch die Druckverhältnissse der zu erwärmenden verdichteten Luft nicht beeinflusst wird. Dadurch wird eine vorteilhafte Ausnützung der thermischen Energie im Laufe des ganzen Arbeitszyklus der Verbrennungsmaschine erreicht. Die Vorteile des rekuperativen Wärmeaustauschers mit einem Raum für direktes Mischen der Abgasen und der verdichteten Luft bestehen in einer einfachen Bauweise und preiswerten Herstellung des Wärmeaustauschers. Eine vorteilhafte Ausführung der erfindungsgemässen Aufladungseinrichtung der Verbrennungsmaschine mit einer durch eine Verbrennungskammer gebildeten Erwärmungseinrichtung mit unabhängiger Zufuhr des gasförmigen oder flüssigen Brennstoffes erlaubt eine Erwärmung der abgenommenen verdichteten Luft auf eine höhere Temperatur und eine unabhängige Erhöhung der gesamten in der Zusatzturbine ausnützbaren thermischen Energie. Die erfindungsgemässe Aufladungseinrichtung vereinigt die Vorteile einer grösseren Ausnützung der Wärme-Energie und einer Regelung der Menge und der Arbeit beider Füll-Kompressoren in einem breiten Feld der Drehzahlen bei gleichzeitigem Erreichen einer hohen Wirksamkeit der Arbeit der Kompressoren.

### Erläuterung der Abbildungen

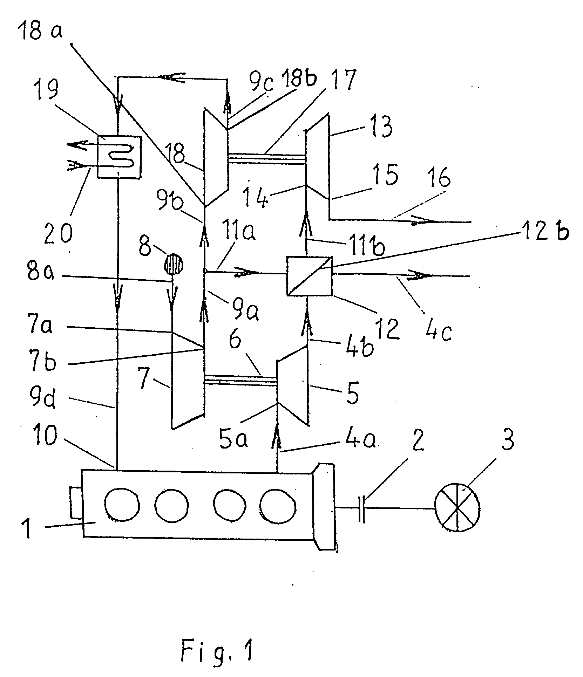

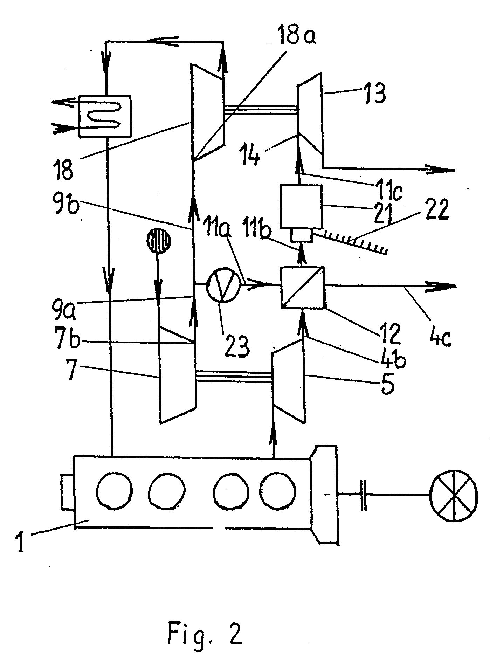

Das Wesen der erfindungsgemässen Aufladungseinrichtung ist auf den beiliegenden Abbildungen 1 und 2 erlautert, von denen die Abbildung 1 eine vorbildliche schematische Anordnung der Aufladungseinrichtung einer Verbrennungsmaschine zeigt, die mit einem regenerativen Wärmeaustauscher für den Wärmeaustausch zwischen der verdichteten Luft und Abgasen versehen ist. Die Abbildung 2 zeigt eine vorbildliche schematische Anordnung einer Aufladungseinrichtung gemäss der Abbildung 1, jedoch mit einer Erwärmungseinrichtung, die durch eine Verbrennungskammer mit einer unabhängigen Zufuhr eines gasförmigen oder flüssigen Brennstoffes mit einem in der Verbindungsleitung angeordneten Regelventil gebildet ist.

### Beschreibung der Ausführungsbeispiele

Die auf der Abbildung 1 gezeigte Verbrennungsmaschine 1, vorbildlich eine Diesel-Verbrennungsmaschine, ist über eine Kupplung 2 mit einem Verbraucher 3 verbunden, der ein Verkehrsmittel oder ein anderer beliebiger Energie-Verbraucher sein kann. Der Austritt der Abgasen der aufgeladenen Verbrennungsmaschine ist durch eine Abgasleitung 4a mit einem Eintritt 5a der Turbine 5 verbunden, die mechanisch durch eine Welle 6 mit dem Rotor des Kompressors 7 verbunden ist. Der Eintritt 7a des Kompressors 7 ist durch eine Saugleitung 8a mit der Umgebung 8 verbunden, die einen Atmosphärendruck aufweist. Der Austritt 7b des Kompressors 7 ist durch eine Leitung 9 der verdichteten Verbrennungsluft mit einem Einlass 10 der aufgeladenen Verbrennungsmaschine 1 verbunden, wobei die Leitung 9 von den Teilen 9a, 9b, 9c, 9d besteht. Die Leitung 9 der verdichteten Verbrennungsluft ist im Teil 9a, 9b durch eine Verbindungsleitung 11a über einen Wärmeaustauscher 12 mit einer Wärmeübertragungstrennwand 12b für Abtrennung der Abgasen und der verdichteten Luft und über eine Verbindungsleitung 11b mit dem Eintritt 14 einer Zusatzturbine 13 verbunden, deren Austritt 15 durch eine Leitung 16 mit der Umgebung verbunden ist, in der ein Atmosphärendruck herrrscht. Der Wärmeaustauscher 12 kann auch rekuperativ mit einem Austritt zu dem Eintritt 14 der Zusatzturbine 13 für ein direktes Mischen der Abgasen und der verdichteten Verbrennungsluft ausgeführt werden. Um die unerwünschten umgekehrten Strömungen in der Leitung 11a vorzubeugen, müssen der Einlass der Abgasen und der Einlass der abgenommenen verdichteten Verbrennungsluft in dem rekuperativen Wärmeaustauscher in Form zweier Düsen mit einer gegenseitigen Ejektor-Wirkung sein. Die Zusatzturbine 13 ist mechanisch durch eine Welle 17 mit dem Rotor eines Zusatzkompressors 18 für die zusätzliche Verdichtung der Verbrennungsluft verbunden, der in dem Teil 9b, 9c der Leitung 9 der verdichteten Verbrennungsluft gemäss der Abbildung 1 angeordnet ist. Der Zusatzkompressor 18 ist mit Eintritt 18a und Austritt 18b versehen. Um die in dem Wärmeaustauscher 12 gewonnnene thermische Energie der Abgasen ausnützen zu können, ist es nötig, diese Energie in eine verdichtete Luft zu übertragen und diese dann durch eine Expansion in einer Zusatzturbine 13 auszunützen. Auf diese Weise wird die mechanische Arbeit an der Welle 17 für den Antrieb des Zusatzkompressors 18 für die Verdichtung der Verbrennungsluft ausgenützt. Deswegen ist es nötig die verdichtete Luft durch eine Leitung 11a aus der Leitung 9 der verdichteten Verbrennungsluft nach der Verdichtung abzunehmen. Durch die Abnahme der verdichteten Luft durch die Leitung 11a aus der Abzweigung zwischen der Leitung 9a und 9b strömt eine zufriedend verdichtete Menge der verdichteten Luft in die Zusatzturbine 13 und der Zusatzkompressor 18 verdichtet nur noch die nötige Menge der Verbrennungsluft für die Verbrennungsmaschine 1. Der Teil 9c, 9d der Leitung 9 der verdichteten Verbrennungsluft ist mit einem für sich bekannten Wärmeaustauscher 19 versehen der eine mit Wärmeaustauschfläche versehene Rohrleitung 20 beinhaltet.Die Rohrleitung 20 ist mit einer Kühlflüssigkeit für die Kühlung der verdichteten Verbrennungsluft gefüllt oder mit einer Kühlluft gekühlt.

Auf der Abbildung 2 ist eine Erwärmungseinrichtung für die verdichtete Verbrennungsluft abgebildet, die durch einen Wärmeaustauscher 12 für Wärmeaustausch zwischen der verdichteten Luft und den Abgasen der Verbrennungsmaschine 1 und eine Erwärmungseinrichtung der verdichteten Luft gebildet ist, die eine Verbrennungskammer 21 mit einer unabhängigen Zufuhr 22 des gasförmigen oder flüssigen Brennstoffes aufweist. Der Wärmeaustauscher 12 ist ähnlich wie auf der Abbildung 1 angeordnet. In der Verbindungsleitung 11b ist eine Verbrennungskammer 21 für zusätzliche Erwärmung der verdichteten Luft angeordnet. Die Verbrennungskammer 21 ist durch eine Leitung 11b mit einem Wärmeaustauscher 12 verbunden. Für die Leitung der zusätzlich erwärmten verdichteten Luft, die mit den Verbrennungsprodukten der Verbrennungskammer 21 gemischt ist, ist die Verbrennungskammer 21 durch eine Leitung 11c mit einem Eintritt 14 der Zusatzturbine 13 verbunden. Die Verbrennungskammer 21 ermöglicht die Erhöhung der Temperatur vor der Zusatzturbine 13 und die Erhöhung der ausnützbarenEnergie. Die Verbrennung des gasförmigen oder flüssigen Brennstoffes in der Verbrennungskammer 21 ist besonders für eine unmittelbare, kurzzeitige Erhöhung der Liestung vorteilhaft, wie z.B. bei der Fahrt eines belasteten Fahrzeuges in einer hügeligen Landschaft. Falls die Erhöhung der Leistung nicht mehr verlangt wird, die Brennstoffzufuhr 22 wird ausgeschaltet und durch die Verbrennungskammer strömt nur die in demWärmeaustau-scher 12 erwärmte Luft. Die Benutzung der Verbrennungskammer 21 ist auch dann vorteilhaft, wenn ein bestimmter erwünschter Verlauf des Drehmomentes der Verbrennungsmaschine 1 ersucht wird, insbesondere in niedrigen Drehzalen. Mit den anwachsenden Drehzahlen der Verbrennungsmaschine 1 wird dann die Zufuhr 22 des Brennstoffes in die Verbrennungskammer 21 je nach dem erwünschten Drehmoment geregelt. In der Verbindungsleitung 11a ist in der Richtung der Strömung der verdichteten Luft vor demWärmeaustauscher 12 ein Regelventil 23 angeordnet, der zu einer Regelung der abgenommenen verdichteten Luft dient.

Bei einem stabilisierten Arbeitszyklus in einem optimalen Arbeitszyklus treibt die Abgasturbine 5 über die Welle 6 einen Kompressor 7 für die Verdichtung der Verbrennungsluft an. Die Verbrennungsluft strömt aus dem Kompressor 7 durch eine Leitung 9a der verdichteten Verbrennungsluft, aus der ein Teil der verdichteten Luft abgenommen wird, der nachfolgend in einem Wärmeaustauscher 12 erwärmt wird. Die erwärmte verdichtete Luft strömt dann durch eine Verbindungsleitung 11b in die Zusatz-Turbine 13, die über eine Welle 17 einen Zusatz-Kompressor 18 antreibt. Zum Antrieb dieses Zusatz-Kompressors 18 wird

Wärmeenergie der Abgasen ausgenützt. Bei Drehzahlverminderung der Verbrennungsmaschine 1 und bei Herabsetzung des Bedarfes an Verbrennungsluft in der Leitung 9d der verdichteten Verbrennungsluft wird die abgenommene, in die Verbindungsleitung 11a, 11b strömende Menge der verdichteten Luft durch Wirkung der Selbst-Regelung erhöht, und die Durchflussmenge über den Wärmeaustauscher 12 und Verbindungsleitung 11b in die Zusatzturbine 13 wird erhöht, wobei die Leistung der Zusa-tzturbine 13 sowie die Drehzahlen der Welle 17 und die Drehzahlen des Zusatzkompressors 18 steigen und der Zusatz-Kompressor 18 erhöht die relative Verdichtung der Verbrennungsluft.

## Patentansprüche

1. Aufladungseinrichtung einer Verbrennungsmaschine, insbesondere einer Diesel-Verbrennungsmaschine, beinhaltend einen mit einer Abgasturbine mechanisch verbundenen Kompressor für Verdichtung der Verbrennungsluft und mindestens einen mit dem Kompressor für die Verdichtung der Verbrennungsluft serienmässig angeordneten und mechanisch mit einer Zusatzturbine verbundenen Zusatzkompressor, wobei der Eintritt der Zusatzturbine mit dem Austritt der verdichteten Verbrennungsluft aus dem Kompressor verbunden ist,
**gekennzeichnet dadurch**, dass
der Austritt (7b) der verdichteten Verbrennungsluft aus dem Kompressor (7) mit dem Eintritt (18a) der Zusatzkompressors (18) und über einen Wärmeaustauscher (12) für Wärmeaustausch zwischen den in der Abgasturbine (5) expandierten Abgasen und der verdichteten Luft mit dem Eintritt (14) der Zusatzturbine (13) verbunden ist.

2. Aufladungseinrichtung einer Verbrennungsmaschine gemäss Anspruch 1,
**gekennzeichnet dadurch**, dass
der Wärmeaustauscher (12) regenerativ und mit einer Wärmeübertragungstrennwand (12b) für Abtrennung der Abgasen und verdichteten Luft versehen ist.

3. Aufladungseinrichtung einer Verbrennungsmaschine gemäss Anspruch 1,
**gekennzeichnet dadurch**, dass
der Wärmeaustauscher (12) rekuperativ für direktes Mischen der Abgasen und der verdichteten Luft gebildet ist.

4. Aufladungseinrichtung einer Verbrennungsmaschine gemäss Anspruch 2,
**gekennzeichnet dadurch**, dass
zwischen dem Wärmeaustauscher (12) und dem Eintritt (14) der Zusatzturbine (13) eine durch eine Verbrennungskammer (21) mit einer unabhängigen Zufuhr (22) des gasförmigen oder flussförmigen Brennstoffes gebildete Erwärmungseinrichtung der verdichteten Luft angeordnet ist.

5. Aufladungseinrichtung einer Verbrennungsmaschine gemäss einem der Ansprüche 1-4,
**gekennzeichnet durch**
ein in der Verbindungsleitung (11a) der verdichteten Luft zum Wärmeaustauscher (12) vor dem Wärmeaustauscher angeordnetes Regelventil (23).

## Claims

1. Supercharging device of a combustion engine, particularly of a Diesel-combustion engine, including a compressor for compression of air-charge mechanically connected with an exhaust-gas driven turbine and at least one additional compressor arranged in series with the compressor for the compression of the air-charge and mechanically connected with an additional turbine, the inlet of which connected with the outlet of the compressed air-charge from the compressor, whereas the outlet (7b) of the compressed air-charge from the compressor (7) connected with the inlet (18a) of the additional compressor (18) and through a heat exchange device (12) for the heat exchange between the exhaust gases expanded in the exhaust-driven turbine (5) and the compressed air with the inlet (14) of the additional turbine (13).

2. Supercharging device of a combustion engine according to the claim 1, whereas the heat exchange device (12) is regenerating and provided with a heat-transmission wall (12b) for the division of the exhaust gases and the compressed air.

3. Supercharging device of a combustion engine according to the claim 1, whereas the heat exchange device (12) is rekuperative for a direct mixing of the exhaust gases and the compressed air.

4. Supercharging device of a combustion engine according to the claim 2, whereas between the heat exchange device (12) and the inlet (14) of the additional turbine (13) arranged a heating device of the compressed air formed by a combustion chamber (21) with all independent supply (22) of gaseous or liquid fuel.

5. Supercharging device of a combustion engine according to one of the claims 1-4, having a control valve (23) arranged in the connecting duct (11a) of the compressed air to the heat exchange device (12) before the heat exchange device (12).

## Revendications

1. Groupe de suralimentation pour moteurs à combustion interne, particulièrement des moteurs Diesel, comprenant un compresseur d'air comburant entrainé mécaniquement par une turbine à gaz d'échappement, et au moins un compresseur auxiliaire monté en série avec le compresseur d'air comburant et entrainé mécaniquement par une turbine auxiliaire, l'entrée de la turbine auxiliaire étant reliée avec la sortie du compresseur d'air comburant, **caractérisé en ce que** la sortie (7b) du compresseur d'air comburant (7) est liée à l'entrée (18a) du compresseur auxiliaire (18) et, traversant un échangeur de chaleur (12), récupérateur de chaleur entre les gaz d'échappement détendus dans la turbine à gaz d'échappement (5) et l'air comprimé, à la sortie (14) de la turbine auxiliaire (13).

2. Groupe de suralimentation pour moteurs à combustion interne selon la revendication 1 , **caractérisé en ce que** l'échangeur de chaleur (12) est régénérateur et muni de la cloison (12b) pour transmission de chaleur pour section des gaz d'échappement et d'air comprimé.

3. Groupe de suralimentation pour moteurs à combustion interne sel on la revendication 1, **caractérisé en ce que** l'échangeur de chaleur (12) est récupérateur pour le mélange direct des gaz d'échappement et d'air comprime.

4. Groupe de suralimentation pour moteurs à combustion interne selon la revendication 2, **caractérisé en ce que** entre l'échangeur de chaleur (12) et l'entrée (14) de la turbine auxiliaire est un dispositif de chauffage d'air comprimé constitué par une chambre de combustion (21) alimentée en combustible gazeux et liquide par un conduit indépendant (22).

5. Groupe de suralimentation pour moteurs à combustion interne selon une des revendications précitées 1 - 4, **caractérisé en ce que** la vanne de réglage (23) est située à la jonction du conduit de dérivation (11a) d'air comprimé et de l'échangeur de chaleur (12) avant l'échangeur de chaleur (12).
